# EUROPÄISCHE PATENTSCHRIFT

(11) **EP 0 520 304 B1**
(45) Veröffentlichungstag und Bekanntmachung des Hinweises auf die Patenterteilung: **09.10.1996**
(21) Anmeldenummer: 92110182.0
(22) Anmeldetag: 17.06.1992
(51) Int. Cl.: G01N 35/02

(54) **Analysesystem zur automatischen Analyse von Körperflüssigkeiten**
Analyser for the automatic analysis of body fluids
Système d'analyse pour l'analyse automatique de fluides corporels

(30) Priorität: 26.06.1991 DE 4121089
(43) Veröffentlichungstag der Anmeldung: 30.12.1992
(73) Patentinhaber: BOEHRINGER MANNHEIM GMBH, 68298 Mannheim (DE)
(72) Erfinder: Pinsl-Ober, Judith, Dr. rer. nat., W-8000 München 90 (DE); Buschek, Herbert, W-8120 Weilheim (DE); Erler, Klaus, Dr. rer. nat., W-8120 Weilheim (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 296 259
- US-A- 4 451 433
- US-A- 4 678 755
- US-A- 4 969 993
- PATENT ABSTRACTS OF JAPAN vol. 13, no. 239 (P-879)6. Juni 1989
- PATENT ABSTRACTS OF JAPAN vol. 12, no. 203 (P-715)11. Juni 1988
- PATENT ABSTRACTS OF JAPAN vol. 11, no. 373 (P-643)5. Dezember 1987
- PATENT ABSTRACTS OF JAPAN vol. 12, no. 408 (P-778)28. Oktober 1988

## Beschreibung

Die Erfindung betrifft ein Analysesystem zur automatischen Analyse von Körperflüssigkeiten. Das System dient zur quantitativen Bestimmung von mehreren unterschiedlichen Analyten (Parametern). Bestandteile des Systems sind ein Analysegerät, Reaktionsgefäße, die auf dem Gerät zu verschiedenen Bearbeitungsstationen transportiert werden, flüssige Reagenzien, die in dem Gerät in Reagenzgefäßen bereitgehalten werden und deren Inhalt für eine Vielzahl von Analysen ausreicht, sowie mindestens ein flüssiger Kalibrator, der mindestens einen Analyten in einer bekannten Konzentration enthält. Darüber hinaus kann das System weitere Bestandteile, wie beispielsweise spezielle Probengefäße oder Kontrollösungen einschließen.

Die Analysesysteme, auf die sich die Erfindung bezieht, werden vielfach als naßchemische selektive Mehrparameter-Analyseautomaten bezeichnet. Auf ihnen werden einzelne Reaktionsgefäße an verschiedenen Bearbeitungsstationen vorbeitransportiert, wobei als Transportmittel häufig ein stufenweise drehbarer Rotor dient. Zu den Bearbeitungsstationen gehören Pipettierstationen, um die Proben und Reagenzien in definierter Menge in die Reaktionsgefäße zu geben, häufig eine Mischeinrichtung zur Vermischung und schließlich eine Meßeinrichtung, um nach Ablauf der Analysereaktion eine physikalisch nachweisbare Meßgröße an der in den Reaktionsgefäßen enthaltenen Reaktionslösung zu bestimmen. Meist wird die optische Absorption in Transmission gemessen.

In diesen konstruktiven Elementen unterscheiden sich die naßchemischen Analyseautomaten von den ebenfalls weit verbreiteten Analysesystemen, bei denen für jede einzelne Analyse ein Analyseelement verwendet wird, das die jeweils für die einzelne Analyse erforderlichen Reagenzien in einer Packungseinheit (meist in trockener Form) enthält. Die Packungseinheit kann ganz verschiedene Formen, beispielsweise als Teststreifen, sogenannte Analysechips, oder als "Testpack" haben. Solche Analysesysteme werden nachfolgend insgesamt als Testpack-Analysesysteme bezeichnet.

Die naßchemischen Analyseautomaten zeichnen sich vor allem durch geringe Analysekosten aus, weil die Reagenzien nicht jeweils einzeln in kleinsten Einheiten verpackt werden müssen. Andererseits ist es sehr viel schwieriger als bei Testpack-Systemen, die ständig steigenden Anforderungen an eine einfache Bedienung, Sicherheit gegen Bedienungsfehler und geringen Zeitbedarf hinsichtlich des Bedienungspersonals zu realisieren.

Die vorliegende Erfindung richtet sich speziell auf die Kalibration von naßchemischen Analyseautomaten. Aufgrund von Instabilitäten sowohl der Reagenzien, als auch des Gerätes ist es erforderlich, das System von Zeit zu Zeit mit Hilfe eines Kalibrators, also einer Flüssigkeit, die den jeweiligen Analyten (Parameter) in bekannter Konzentration enthält, zu Kalibrieren. Damit wird eine Auswertekurve (funktionaler Zusammenhang zwischen der physikalischen Meßgröße, z.B. Absorption, und der gesuchten Konzentration) festgelegt und im Gerät abgespeichert. Da die Auswertekurve bei Tests, die auf einer photometrischen Transmissionsmessung beruhen, meist einen geraden Verlauf hat, genügt für die Kalibration in der Regel neben der Messung eines Leerwertes ("Blank") eine Messung an einem einzigen Kalibrator mit einer Konzentration ungleich Null. Unter Umständen sind (bei einem nichtlinearen Verlauf der Kalibrationskurve) auch mehrere Kalibrationen in verschiedenen Konzentrationsbereichen eines Parameters erforderlich.

Dabei sind vor allem folgende Kalibrationsverfahren üblich:
a) Der Kalibrator wird von einer Bedienungsperson in das System eingebracht und die Kalibration wird für den gewünschten Parameter durch manuelle Eingabe angefordert. Dabei bestimmt das Bedienungspersonal den Zeitpunkt jeder Kalibration anhand von Vorschriften der Reagenz- bzw. Gerätehersteller.
b) In dem Analysegerät sind zeitliche Intervalle (Kalibrationsintervalle) gespeichert. Jeweils nach Ablauf eines solchen Intervalls wird das Bedienungspersonal aufgefordert, eine Kalibration manuell einzuleiten. Eine Variante dieses Systems, bei der für jeden Parameter ein gesondertes Kalibrationsintervall abgespeichert wird, ist in der US-Patentschrift 4 678 755 beschrieben. Dabei wird die Notwendigkeit einer Kalibration für den Benutzer in verschiedenerlei Weise (beispielsweise als Tabelle auf einem Bildschirm) angezeigt und es kann zusätzlich ein akustischer Alarm ausgelöst werden, um auf das Erfordernis der Kalibration hinzuweisen.

In der japanischen Patentanmeldung mit der Publikationsnummer 62-144071 ist die Möglichkeit beschrieben, in Ergänzung zu der konventionell durchgeführten Kalibration in bestimmten periodischen Abständen die Extinktion eines Null-Standards (Blank) nachzumessen, um dadurch zeitabhängige Veränderungen des Reagenz zu berücksichtigen. Ein wichtiges Beispiel eines Parameters, bei dem eine solche periodische Nachstellung des Null-Wertes vorteilhaft ist, ist die Analyse von Bicarbonat, die auf der Detektion von CO₂ basiert. Charakteristisch für diesen Test ist, daß die Eigenschaften des Reagenz sich durch die unvermeidliche Aufnahme von CO₂ aus der Luft verhältnismäßig schnell ändern. Es ist deshalb erforderlich, den Null-Wert der Kalibration in regelmäßigen Zeitabständen nachzustellen. Dies geschieht durch eine Messung an einer physiologischen Kochsalzlösung als Blank. Diese ist, im Gegensatz zu üblichen Kalibratoren mit einer Konzentration ungleich Null, problemlos lagerbeständig.

Obwohl in der genannten Druckschrift von einer Kalibration gesprochen wird, handelt es sich bei diesem Verfahren nur um eine Anpassung der ursprünglich (unter Verwendung eines Kalibrators mit einer Konzentration ungleich Null) in konventioneller Weise festgelegten Auswertekurve an die zeitabhängige Änderung des Reagenz, wobei die Auswertekurve jeweils in Anpassung an den gemessenen Null-Wert verschoben wird. Das Verfahren ist auf andere Parameter nicht ohne weiteres übertragbar. In der Praxis wird es ausschließlich zur Anpassung des Null-Wertes bei der Bicarbonatbestimmung eingesetzt. Die starre periodische Durchführung der Anpassungsmessung in konstanten Abständen ist für eine vollautomatische Kalibration nicht geeignet.

Um einen hohen Grad an Analysegenauigkeit mit reduzierter Wahrscheinlichkeit von Bedienungsfehlern und ohne wesentliche Erhöhung der System-Gesamtkosten zu erreichen, wird erfindungsgemäß ein System gemäß Anspruch 1 vorgeschlagen. Der Kalibrator ist in einer Kalibratorstation des Analysegerätes in flüssiger Form gebrauchsfertig (d.h. so, daß er ohne menschliches Zutun aus dem Kalibratorgefäß entnommen und analysiert werden kann) vorrätig. Die Kalibration für verschiedene Parameter kann unabhängig voneinander automatisch (d.h. ohne daß eine Bedienungsperson eingreifen muß) eingeleitet (initiiert) und durchgeführt werden. In den Kalibrationsinitiierungszyklus wird jeweils mindestens eine systemimmanente Kalibrations-Einflußgröße abgefragt, mit einem für den jeweiligen Parameter spezifisch definierten Steuerungswert logisch verknüpft und die Entscheidung über die Initiierung der Kalibration unter Berücksichtigung des Ergebnisses der logischen Verknüpfung automatisch getroffen. Zweckmäßigerweise wird der Kalibrationsinitiierungszyklus nacheinander für sämtliche Analyseparameter, für die das Gerät eingerichtet ist, durchgeführt. Dieser Prozeß wird fortlaufend oder in bestimmten Zeitabständen wiederholt.

Die Erfindung erlaubt die Durchführung der erforderlichen Kalibrationen ohne menschliche Eingriffe. Dadurch werden Fehler vermieden. Die Initiierung der Kalibration ist jeweils spezifisch auf den Parameter abgestimmt und es werden zusätzlich systemimmanente Kalibrations-Einflußgrößen im Rahmen des Kalibrationsinitiierungszyklus berücksichtigt. Dadurch werden einerseits in vielen Fällen längere zeitliche Abstände der Kalibrationen eines bestimmten Parameters ermöglicht und damit eine Einsparung an. Zeit und Kosten erzielt. Andererseits können Störfaktoren, die eine vorzeitige Neukalibration erforderlich machen, automatisch erkannt werden. Es wird ein wesentlicher Fortschritt im Hinblick auf das in der Analysetechnik seit langem angestrebte Ziel erreicht, daß naßchemische Analysesysteme Operator-unabhängig arbeiten sollen (stand-alone-Betrieb").

Die Erfindung überwindet die in der Fachwelt vorherrschenden Auffassung, daß die Analysesicherheit es erfordere, Kalibrationsschritte jeweils individuell einzuleiten und mit einem frisch zubereiteten Kalibrator durchzuführen.

Die Initiierung einer Kalibration läuft auf Basis eines definierten Algorithmus ab, der als Kalibrationsinitiierungszyklus bezeichnet wird. Dieser Algorithmus ist, wie im folgenden noch näher erläutert wird, jeweils spezifisch auf den Parameter abgestimmt. Dies bezieht sich auf die Auswahl von einer oder mehreren systemimmanenten Einflußgrößen, die bei der Initiierung der Kalibration eines bestimmten Parameters berücksichtigt werden. Es bezieht sich weiter auf die Festlegung des jeweiligen definierten Steuerungswertes und die Art der logischen Verknüpfung.

Systemimmanente Kalibrations-Einflußgrößen (die man auch als Kalibrationsindikatoren bezeichnen kann) im Sinne der Erfindung sind Zustände oder Eigenschaften von Bestandteilen des Analysesystems einschließlich der Proben, die für die Notwendigkeit, eine Kalibration zu initiieren, von Bedeutung sind. Im Rahmen der Erfindung konnten Größen gefunden werden (die keinen unmittelbaren Bezug zur Art des Kalibrators, dessen Konzentrations-Sollwert oder dessen tatsächlichem Konzentrations-Meßwert (Ist-Wert) haben), durch deren Überwachung die Notwendigkeit für eine Kalibration während des Betriebes eines diagnostischen Analysesystems automatisch erkannt wird, so daß die Initiierung der Kalibration zum richtigen Zeitpunkt möglich ist. Diese systemimmanenten Einflußgrößen sind geeignet, den Zustand des Gesamtsystems, bestehend aus Proben, Kalibratoren, Kontrollösungen, Reagenzien und Analysegerät in dem jeweils für die Initiierung der Kalibration erforderlichen Umfang zu charakterisieren. Durch ihre Überwachung kann die Ursache, die eine Kalibration für einen Parameter erforderlich macht (bzw. geeignet ist, eine Kalibration hinauszuschieben) automatisch erkannt werden. Das System ist somit zur Selbstdiagnose und - da die Kalibration automatisch durchgeführt wird - auch zur Selbstregelung fähig.

Eine systemimmanente Kalibrations-Einflußgröße kann ein Meßwert (beispielsweise die Absorption oder der pH-Wert eines Reagenz) sein. In diesem Fall ist der Steuerungswert, mit dem der detektierte Meßwert verknüpft wird, ein Zahlenwert. Es kann sich jedoch auch um eine in maschinenlesbarer Form dem System mitgeteilte Information über einen Systembestandteil (beispielsweise die Reagenzcharge und die Flaschennummer des Reagenz) handeln.

Schließlich sind als systemimmanente Kalibrations-Einflußgrößen auch Informationen anzusehen, die in einem Analysegerät üblicherweise ohnehin vorliegen, im Rahmen der Erfindung jedoch in neuartiger Weise zur automatischen Initiierung einer Kalibration verwendet werden. Beispiele hierfür sind die Art der Proben (insbesondere Serum oder Urin), für welche innerhalb eines automatischen Analyselaufes (Run) des Gerätes Analysen durchgeführt werden sollen, sowie die für die einzelnen Proben angeforderten Analysen (Parameter) und die daraus üblicherweise vom Computer des Gerätes berechnete Sequenz, mit der die Anforderungen abgearbeitet werden. In diesem Falle kann als Steuerungswert beispielsweise einen Grenz-Zahlenwert von Analysen eingegeben sein, die für einen bestimmten Parameter am Ende eines Run noch durchgeführt werden können, ohne daß eine Kalibration erforderlich ist. Die Probenart (Serum oder Urin) wird durch logische Verknüpfung mit einer abgespeicherten Information berücksichtigt, ob eine Kalibration für diese Probenart und den in Verbindung hiermit angeforderten Parameter bereits vorliegt. Diese verschiedenen Möglichkeiten der Berücksichtigung systemimmanenter Einflußgrößen werden im folgenden noch näher erläutert.

Es wird deutlich, daß der Steuerungswert sowohl ein einen Zustand bezeichnender logischer Wert, als auch ein Zahlenwert sein kann. Allgemein ist es ein Wert, der zur Steuerung des Kalibrationsinitiierungszyklus durch logische Verknüpfung mit einer systemimmanenten Einflußgröße geeignet ist. Wenn die systemimmanente Einflußgröße eine kontinuierlich veränderliche Variable, wie beispielsweise der Absorptionswert des Reagenz ist, ist der Steuerungswert in der Regel ein Schwellwert oder ein Wertebereich dieser Variablen. Wenn die Kalibrations-Einflußgröße lediglich zwei logische Zustände hat, wie beispielsweise bei der Abfrage eines Reagenzflaschenwechsels (keine neue Flasche entspricht logisch 0, neue Flasche entspricht logisch 1), hat der Steuerungswert normalerweise ebenfalls nur zwei logische Zustände (z.B. logisch 0 für "keine Kalibration bei Flaschenwechsel" und logisch 1 für "Kalibration bei Flaschenwechsel").

Da die Notwendigkeit einer neuen Kalibration eines bestimmten Parameters wesentlich von zeitabhängigen Veränderungen der verwendeten Reagenzien abhängt, erfolgt auch die Initiierung einer Kalibration meist in erster Linie zeitabhängig, wobei für jeden Parameter ein Kalibrationsintervall abgespeichert ist. Erfindungsgemäß erfolgt jedoch zusätzlich ein "System-feedback", bei dem weitere Einflußgrößen durch logische Verknüpfung berücksichtigt werden.

Eine weitere Erhöhung der Zuverlässigkeit und Analysesicherheit wird durch folgende bevorzugte Maßnahmen erreicht.

Nach jeder Kalibration eines Parameters sollte eine Kontrollmessung mit einer Kontrollösung bekannter Konzentration des gleichen Parameters durchgeführt werden. Dadurch werden Fehler bei der Kalibrations-Messung, beispielsweise durch eine Luftblase im Photometer, erkannt. Die Kontrollösung kann grundsätzlich der gleiche Kalibrator sein, mit dem die Kalibration durchgeführt wurde. Vorzugsweise wird jedoch eine spezielle Kontrollösung verwendet, die in einer Kontrollösung-Station des Gerätes gebrauchsfertig vorrätig gehalten wird. Dadurch werden auch solche Kalibrationsfehler erkannt, die ihre Ursache in dem Kalibrator haben.

Die Kalibratorstation und gegebenenfalls die Kontrollösungsstation (welche vorteilhaft räumlich zusammengefaßt sind) sind gekühlt. Hierdurch werden Fehler durch Verdunstung und/oder chemische Zersetzung des Kalibrators bzw. der Kontrollösung reduziert. Die Kühlung erfordert zwar einen erheblichen technischen Aufwand, jedoch wird dieser durch die Vorteile der Erfindung mehr als ausgeglichen.

Um die Kalibration während eines ganzen Betriebstages automatisch zu gewährleisten, sollte der Kalibrator in flüssigem Zustand und in Kontakt mit Luft "tagesstabil" sein, d.h. die Konzentration des jeweiligen Analyten sollte während eines vollen Arbeitstages im Sollwertbereich bleiben.

Die Erfindung wird im folgenden anhand eines in den Figuren schematisch dargestellten Ausführungsbeispiels näher erläutert; es zeigen:
- Fig. 1: Eine Aufsicht auf ein für die Erfindung geeignetes Analysegerät,
- Fig. 2: ein Blockschaltbild eines für die Erfindung geeigneten Analysegerätes,
- Fig. 3: eine perspektivische Prinzipdarstellung eines Reagenzgefäßdetektors,
- Fig. 4: eine perspektivische Prinzipdarstellung eines Kalibratorgefäßdetektors,
- Fig. 5: ein Ablaufdiagramm zur Verdeutlichung des funktionalen Ablaufs in einem erfindungsgemäßen Analysesystem.

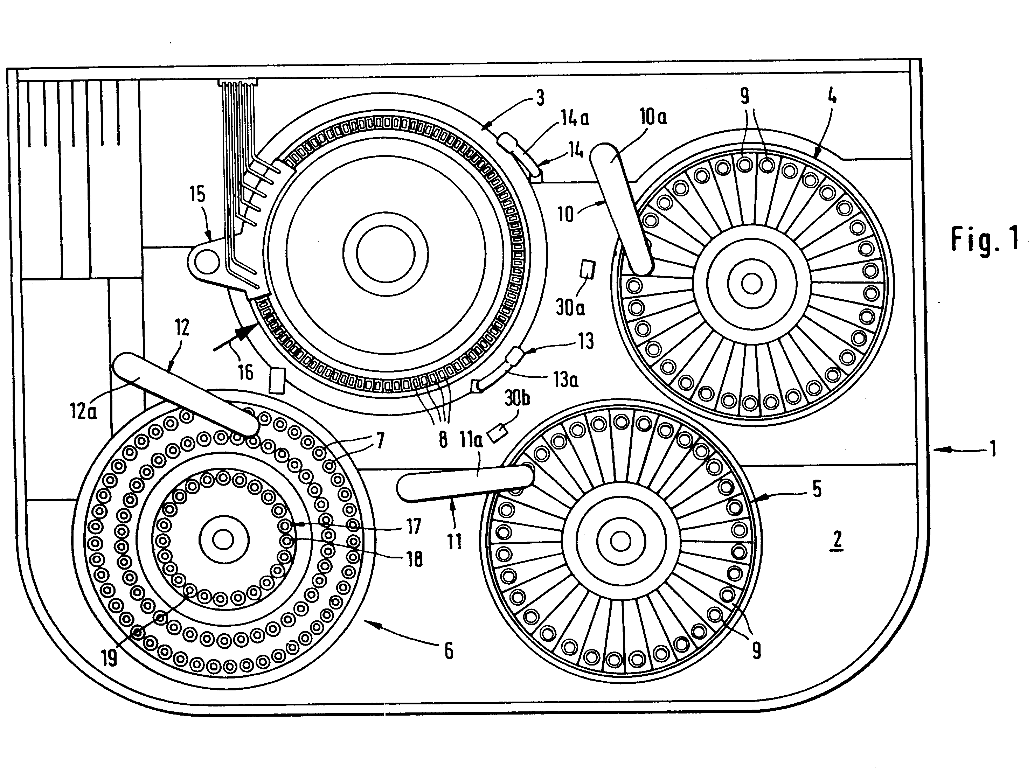

Das in Figur 1 dargestellte Analysesystem 1 weist auf einem Bearbeitungstisch 2 einen Reaktionsrotor 3, zwei Reagenzrotoren 4 und 5 mit Reagenzgefäßen 9 und einen Probenrotor 6 mit Probengefäßen 7 auf. Auf dem Reaktionsrotor 3 sind kreisförmig zahlreiche Reaktionsgefäße 8 angeordnet. An der Peripherie des Reaktionsrotors 3 befinden sich verschiedene Bearbeitungsstationen, nämlich Pipettierstationen 10, 11, 12, Mischstationen 13,14 und eine Waschstation 15 zum Reinigen der Reaktionsgefäße 8. Die Schwenkarme 10a bis 14a der verschiedenen Stationen werden computergesteuert und dienen dazu, die Probe und die Reagenzien jeweils zum richtigen Zeitpunkt in die Reaktionsgefäße 8 zu transferieren, bzw. ein Rührpaddel der Mischstationen 13,14 zum Mischen in die Reaktionsgefäße 8 einzutauchen. Die photometrische Messung erfolgt bei dem dargestellten Gerät durch die Reagenzgefäße hindurch, die im unteren Teil als optische Küvetten ausgebildet sind. Die Photometriestation befindet sich deshalb unter der Abdeckung des Bearbeitungstisches 2 und ist durch einen Pfeil 16 symbolisiert.

Insoweit ist der Aufbau des Systems konventionell und muß nicht näher erläutert werden.

Eine Besonderheit des erfindungsgemäßen Systems ist die Kalibratorstation 17, die im dargestellten Fall in den Probenrotor 6 integriert ist. Sie enthält mehrere Kalibratoren, die in flüssiger Form in Kalibratorgefäßen 18 gebrauchsfertig vorrätig gehalten werden. Die Zahl der erforderlichen Kalibratoren hängt von der Anzahl der Parameter und von der Möglichkeit ab, Mehr-Parameter-Kalibratoren zu verwenden, bei denen mehrere verschiedene Analyten in bekannter Konzentration in einer einzigen Lösung enthalten sind. Um die gewünschte Tagesstabilität zu gewährleisten, ist es im Rahmen der Erfindung häufig vorteilhaft Einfach-Kalibratoren einzusetzen. Da die Handhabung automatisch geschieht, ist hiermit praktisch kein zusätzlicher Aufwand verbunden.

Die Kalibratorstation 17 enthält im dargestellten bevorzugten Fall zusätzliche Kontrollgefäße 19, die Kontrollösungen enthalten. Insgesamt sollte die Kalibratorstation 17 (beispielsweise mit Hilfe von Peltier-Elementen) gekühlt sein. Die Öffnungen der Kalibratorgefäße 18 und der Kontrollgefäße 19 befinden sich in der Reichweite der an dem Arm 12a der Proben-Pipettierstation 12 schwenkbaren Pipettiernadel und können somit statt einer Probe in ein Reaktionsgefäß 8 auf dem Reaktionsrotor 3 transferiert werden.

Sowohl die in den Kalibratorgefäßen 18 vorrätig gehaltenen flüssigen Kalibratoren als auch die in den Kontrollgefäßen 19 vorrätig gehaltenen Kontrollösungen enthalten die jeweiligen Analyten in bekannten Konzentrationen. Ein Kalibrator und eine Kontrollösung für einen bestimmten Parameter können unter Umständen identisch sein. Vielfach werden jedoch als Kalibratoren Lösungen eingesetzt, bei denen die Konzentration des jeweiligen Analyten in einem sehr engen Sollwertbereich liegt und der Analyt in einem Lösungsmittel gelöst ist, das eine hohe Stabilität des Kalibrators gewährleistet. Bei einer Kontrollösung wird dagegen vorzugsweise Serum oder eine serumartige Flüssigkeit als Lösungsmittel verwendet und der Sollwertbereich des Analyten ist etwas breiter.

Zur Durchführung einer Kalibration wird - ohne daß ein menschliches Eingreifen erforderlich ist - der Rotor 6 jeweils in eine Position gedreht, in der sich der benötigte Kalibrator im Schwenkbereich des Arms 12a der Probenpipettierstation 12 befindet. Eine abgemessene Teilmenge des Kalibrators wird aus dem Kalibratorgefäß 18 entnommen und in das Reaktionsgefäß 8 transferiert. Dort werden in üblicher Weise Reagenzien zugegeben und die aus der Reaktion resultierende Farbänderung wird photometrisch bestimmt. Dieser Meßwert wird im Computer des Gerätes als neuer Kalibrationsfaktor definiert und in gleicher Weise wie bei manuell initiierten Kalibrationen zur Korrektur der Auswertekurve verwendet.

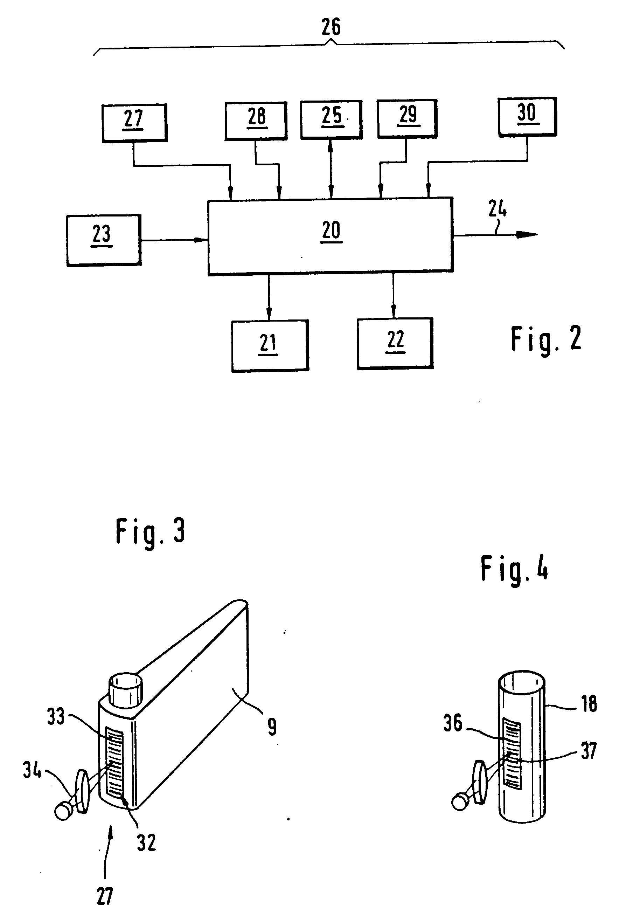

Figur 2 verdeutlicht das Zusammenwirken der verschiedenen (in Form eines Blockschaltbilds dargestellten) Komponenten eines erfindungsgemäßen Systems. Eine mikroprozessorgesteuerte Zentraleinheit 20 mit Speicher 25 dient in üblicher Weise dazu, eine Rotorsteuerung 21 und eine Behandlungsstation-Steuerung 22 anzusteuern, um die erforderlichen Drehbewegungen der Rotoren 3, 4, 5 und 6, Bewegungs-, Ansaug-, Ausstoß-, Wasch- und Meßvorgänge der Behandlungsstationen 10 bis 16 zu steuern. Die Meßwerte der Photometriestation 16 werden über eine Meßwerterfassung 23 an die Zentraleinheit 20 geliefert, verarbeitet und über einen Datenausgang 24 an nicht dargestellte Datenausgabeeinheiten, wie beispielsweise einen Drucker oder einen Bildschirm, ausgegeben.

Wesentlich für die Erfindung ist, daß insgesamt mit 26 bezeichnete Mittel zur Berücksichtigung verschiedener systemimmanenter Einflußgrößen vorhanden sind, deren Wert die Initiierung einer Kalibration beeinflußt. Dargestellt sind ein Reagenzgefäßdetektor 27, ein ReagenzfüllstandsDetektor 28, ein Reagenzabsorptionsdetektor 29, ein Reagenz-pH-Detektor 30 sowie der Speicher 25.

Die einzelnen Detektoren können weitgehend konventionell ausgebildet sein. Der Begriff "Detektion" wird dabei breit verstanden als jede Form der Erfassung oder Beobachtung einer systemimmanenten Einflußgröße.

Figur 3 zeigt eine bevorzugte Form eines Reagenzgefäßdetektors 27. Das Reagenzgefäß 9 trägt auf einem Etikett (Label) 32 eine maschinenlesbare Codierung in Form eines Barcode 33. Geräteseitig ist ein Reflexions-Codeleser 34 vorgesehen, der konventionell aufgebaut und in der Figur lediglich symbolisch dargestellt ist.

Der Reflexions-Codeleser 34 ist an der Pheripherie des jeweiligen Reagenzrotors 4,5 so eingebaut, daß er den Barcode auf den im Gerät befindlichen Reagenzgefäßen 9 lesen kann. Ein so aufgebauter Reagenzgefäßdetektor 27 erfüllt im Rahmen der Erfindung eine doppelte Funktion. Zum einen dient er dazu, den Wechsel eines Reagenzgefäßes zu erkennen. Zum zweiten erlaubt er, den Barcode 33 zu lesen. Dieser enthält eine Information über die Charge des Reagenz und vorzugsweise zusätzlich über die Identität der Reagenzflasche (Herstellungs-Nummer). Das Lesen dieses Barcodes kann zusätzlich zu der Initiierung einer Kalibration auch zu ergänzenden Sicherheitsmaßnahmen genutzt werden. Insbesondere wird kontrolliert, ob das richtige Reagenz eingesetzt ist (Reagenzidentifikation). Außerdem kann festgestellt werden, ob die gleiche Flasche mehrfach in das Gerät eingesetzt wird, was auf einen die Analysegenauigkeit beeinträchtigenden Mißbrauch des Reagenzgefäßes schließen läßt.

Wie in Figur 4 dargestellt ist, tragen auch die Kalibratorgefäße bevorzugt ein Etikett 36 mit einem Barcode 37. Ein wiederum konventionell ausgebildeter Barcodeleser 38 dient zur Erfassung der codierten Information. Der Code 37 enthält insbesondere Informationen über den bzw. die Parameter des Kalibrators. Dadurch wird eine "positive Kalibratoridentifikation" gewährleistet, d.h. eine Verwechslung des Kalibrators wird ausgeschlossen.

Die Detektion des Reagenz-Flüssigkeitsstandes (Füllstandes) in den Reagenzgefäßen 9 kann nach bekannten Verfahren zum Beispiel mit Hilfe einer Leitfähigkeitsmessung oder mit Hilfe einer Kapazitätsmessung erfolgen. Die Meßeinrichtung befindet sich bevorzugt an der Absaugnadel des jeweiligen Pipettierarmes 10a, 11a, so daß die Höhenposition des jeweiligen Pipettors beim Eintauchen in die Reagenzflüssigkeit detektiert wird. Ein solcher Füllstandsdetektor ist bei vielen Geräten ohnehin vorhanden, um ein Warnsignal zu erzeugen, wenn der Reagenzvorrat in einem der Gefäße 9 zur Neige geht.

Als Reagenz-pH-Detektor wird vorzugsweise eine übliche pH-Elektrode verwendet, die an dem Reaktionsrotor 3 oder auch unmittelbar an dem Reagenzrotor 4 bzw. 5 angeordnet sein kann. Im dargestellten Fall ist ein pH-Detektor unter dem Tisch 2 angeordnet, dessen Einfüllöffnungen 30a und 30b jeweils im Schwenkbereich der Arme 10a,11a der Reagenz-Pipettierstationen 10,11 positioniert sind, so daß bei Bedarf eine Probe des Reagenz in die jeweilige Einfüllöffnung 30a,30b transferiert werden kann.

Für die Detektion der optischen Absorption des Reagenz sind keine zusätzlichen konstruktiven Mittel erforderlich. Als Reagenzabsorptionsdetektor dient vielmehr die Photometriestation 16, wobei das reine Reagenz ohne Zugabe von Probe photometriert wird.

Auch der Speicher 25 der Zentraleinheit 20 ist als Mittel zur Berücksichtigung systemimmanenter Einflußgrößen anzusehen, wenn solche Größen dort gespeichert werden. Insbesondere kann es sich dabei um Informationen über die Proben oder Analysen handeln, wie weiter unten näher erläutert wird.

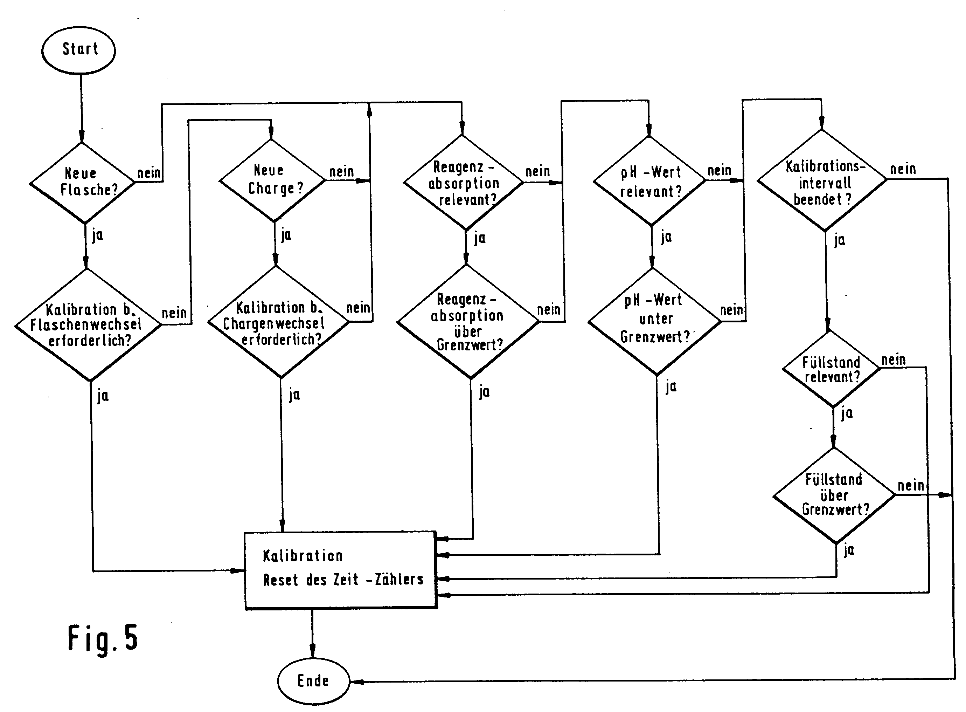

Wie erwähnt, hat der Systemfeedback der systemimmanenten Einflußgrößen in Form einer logischen Verknüpfung Einfluß auf die Initiierung einer Kalibration. Beispiele werden anhand von Figur 5 erläutert.

Dargestellt ist das Ablaufdiagramm eines Kalibrationsinitiierungszyklus für einen Parameter, bei dem neben einem Kalibrationsintervall der Wechsel des Reagenzgefäßes, der Wechsel der Charge des Reagenz, der Füllstand des Reagenz, der pH-Wert und die Reagenzabsorption als systemimmanente Einflußgrößen berücksichtigt werden. Der dargestellt Zyklus läuft auf dem Gerät in festgelegten Zeitabständen automatisch ab. Gleichartige Zyklen werden nacheinander für die einzelnen Parameter individuell durchgeführt.

Innerhalb des Zyklus erfolgt zunächst eine Abfrage, ob (seit dem letzten Kalibrationsinitiierungszyklus des gleichen Parameters) ein Wechsel des Reagenzgefäßes (Flasche) durchgeführt wurde. Dies wird durch den Reagenzgefäßdetektor angezeigt, wobei der Flaschenwechsel zu einer Zustandsänderung eines Speicherelementes (Flip-Flop) führt, dessen Ist-Wert in dieser Stufe des Zyklus abgefragt wird.

Falls ein Flaschenwechsel vorgenommen wurde, erfolgt eine Abfrage, ob bei Flaschenwechsel eine Neukalibration erforderlich ist. Die Antwort ist abhängig vom jeweiligen Reagenz und damit von dem Parameter. Sie wird bei der Einrichtung des Systems für jeden Parameter als logischer Steuerungswert abgespeichert. Bei Reagenzien mit kritischen stabilitätseigenschaften wird die Antwort "ja" gespeichert und es erfolgt eine Kalibration bei jedem Wechsel der Reagenzflasche.

Falls die zuletzt erwähnte Abfrage zu der Antwort "nein" führt, erfolgen entsprechende Abfragen hinsichtlich des Wechsels der Charge bzw. der Erforderlichkeit einer Neukalibration bei Chargenwechsel. Dadurch wird berücksichtigt, daß beim Wechsel eines Reagenzgefäßes häufig eine neue Charge des Reagenz verwendet wird und dieser Chargenwechsel auch in solchen Fällen eine Neukalibration erfordern kann, in denen der Flaschenwechsel bei gleichbleibender Charge nicht zur Initiierung einer Kalibration führt.

Falls eine dieser Abfragen oder die erste Abfrage (hinsichtlich des Flaschenwechsels) zur Antwort "nein" führt, erfolgt die Abfrage, ob die Reagenzabsorption für den jeweiligen Parameter relevant ist. Auch dies ist bei der Einrichtung des Systems für jeden Parameter abgespeichert worden. Ist die Antwort "ja", so erfolgt eine Abfrage, ob die Reagenzabsorption über einem (parameterspezifischen, als Steuerungswert abgespeicherten) Grenzwert liegt. Bei positivem Ergebnis erfolgt eine Kalibration.

Ist die Antwort auf eine der Abfragen hinsichtlich der Reagenzabsorption "nein", erfolgen entsprechende Abfragen hinsichtlich des pH-Wertes. In diesem Fall erfolgt eine Kalibration, wenn der pH-Wert unter einem als Steuerungswert abgespeicherten Grenzwert liegt.

Wenn auch hier beide Abfragen mit "nein" beantwortet werden, erfolgt als nächstes die Abfrage, ob das Kalibrationsintervall abgelaufen ist. Bei der Antwort "nein" ist der Zyklus beendet.

Bei der Antwort "ja" erfolgen zwei weitere Anfragen zum Füllstand des Reagenz in dem jeweiligen Reagenzgefäß. Zweck dieser Abfragen ist es, den mit der Neukalibration verbundenen Aufwand an Kalibratorflüssigkeit und Maschinenzeit zu vermeiden, wenn der Füllstand unterhalb eines definierten Grenzwertes ist (d.h. nur noch eine geringe Restmenge Reagenz in dem Reagenzbehälter vorhanden ist) und für den fraglichen Parameter eine geringfügige Überschreitung des Kalibrationsintervalls toleriert werden kann. Falls entweder der Füllstand für den betreffenden Parameter nicht relevant ist (d.h. auch bei niedrigem Füllstand eine Kalibration erfolgen soll) oder der Füllstand über dem als Steuerungswert abgespeicherter Grenzwert liegt, wird eine Kalibration initiiert. Dagegen entfällt sie, wenn der Füllstand relevant ist und unterhalb des Grenzwertes liegt.

Bei Initiierung einer Kalibration erfolgt jeweils ein Reset des Zählwerkes, welches den Ablauf des Kalibrationsintervalls kontrolliert.

Bei dem in Figur 5 dargestellten Beispiel werden systemimmanente Einflußgrößen mit Hilfe logischer Verknüpfungen berücksichtigt, um einerseits zusätzliche Kalibrationsvorgänge (bei Flaschen- oder Chargenwechseln oder bei Erreichen der pH- oder Absorptionsgrenzwerte) auszulösen und andererseits unnötige Kalibrationsvorgänge (bei geringem Füllstand des Reagenz) zu vermeiden. Im übrigen erfolgt die Kalibration in definierten Zeitabständen jeweils nach Ablauf eines Kalibrationsintervalls.

Einflußgrößen, die mit dem Zustand des Reagenz unmittelbar verknüpft sind, können auch völlig unabhängig vom Zeitablauf zur Initiierung eines Kalibrationsvorganges herangezogen werden. Solche Einflußgrößen sind die Absorption des Reagenz oder dessen pH-Wert. Es wurde nämlich gefunden, daß diese Größen unter Umständen einen besseren Indikator für den Zustand des Reagenz als der Zeitablauf darstellen.

Veränderungen von Reagenzien in naßchemischen Analyseautomaten sind von einer Vielzahl von Einflußfaktoren, beispielsweise der Temperatur, der Luftfeuchtigkeit, dem Alter der Reagenzien vor Öffnung des Reagenzbehälters (d.h. der Lagerzeit) und dergleichen abhängig. Um dies zu berücksichtigen, muß bei der Festlegung eines ausschließlich zeitlich definierten Kalibrationsintervalls von "worst case" Überlegungen ausgegangen werden, d.h. es wird dasjenige Kalibrationsintervall gewählt, welches bei ungünstigsten Bedingungen noch eine rechtzeitige Kalibration sicherstellt. Wenn statt dessen ein Indikator, der für den Zustand des Reagenz charakteristisch ist, bestimmt wird, kann bei günstigen Umständen die Kalibration seltener erfolgen, ohne daß die Analysegenauigkeit darunter leidet.

Wie erwähnt, können auch Informationen über die Probe oder die Analysen, die in dem Speicher 25 abgespeichert sind, als systemimmanente Einflußgrößen bei der Initiierung einer Kalibration berücksichtigt werden.

Soweit das System zur Analyse mehrerer verschiedener Probenarten (zum Beispiel Serum und Urin) dient, können Informationen über die Probensequenz abgespeichert sein und abgefragt werden. Dadurch ist es möglich, rechtzeitig vor der Analyse der ersten Probe einer anderen Probenart eine Neukalibration durchzuführen.

Informationen über die Analysen, die in dem Speicher 25 abgespeichert sind, können ebenfalls von Bedeutung für die Initiierung einer Kalibration sein. Beispielsweise kann vor jeder Kalibration eine zusätzliche Abfrage erfolgen, ob der jeweilige Parameter als Analysewert für die in nächster Zeit zu bearbeitenden Proben überhaupt angefordert wurde. Soweit dies nicht der Fall ist, kann die Kalibration entsprechend hinausgeschoben werden. Falls eine solche Einrichtung vorhanden ist, sollte andererseits eine Detektion besonders definierter Proben, insbesondere sogenannter "Notfallproben" möglich sein, wozu entweder ein Probendetektor mit einem Barcodeleser (ähnlich Fig. 3 und Fig. 4) oder eine in dem Speicher 25 abgespeicherte Information dienen kann. Dadurch wird gewährleistet, daß bei Einfügung zusätzlicher Notfallproben in die vorher geplante Probensequenz eine Neukalibration erfolgt, wenn ein Parameter bestimmt werden muß, dessen Kalibration zunächst aufgeschoben worden war.

Es kann auch sinnvoll sein, die Anzahl der durchgeführten Analysen eines bestimmten Parameters als Einflußgröße für die Initiierung der Kalibration zu berücksichtigen. Dies gilt insbesondere, wenn ein Reagenz besonders empfindlich auf Verschleppung von Stoffen aus anderen Reagenzien reagiert und deswegen nach einer bestimmten Zahl von Reagenzpipettierungen eine Neukalibration erforderlich ist.

Auch Serviceeingriffe in das Analysesystem oder Umrüstungen des Systems können als systemimmanente Einflußgrößen Berücksichtigung finden. Wenn das Analysesystem solche Eingriffe selbst registriert und entsprechende Informationen abspeichert, kann eine automatische Neukalibration ausgelöst werden.

In allen Fällen erfolgt die Initiierung der Kalibration parameterspezifisch, d.h. individuell auf die Erfordernisse des jeweiligen Parameters angepaßt. Es kann zweckmäßig sein, für einige Parameter die Kalibration jeweils grundsätzlich zeitabhängig auszulösen und andere Einflußgrößen lediglich ergänzend zu berücksichtigen, während für andere Parameter die Kalibration jeweils aufgrund einer oder mehrerer für den Zustand des Reagenz charakteristischer Indikatoren initiiert wird.

Die Mittel zur Implementierung der beschriebenen Funktionen während des Kalibrationsinitiierungszyklus sind dem Fachmann ohne weiteres zugänglich. Wenn eine Hardware-Implementierung gewünscht wird, können Entscheidungen auf Basis der Verknüpfung logischer Zustände (beispielsweise, ob beim Wechsel einer Reagenzflasche ein Kalibration initiiert werden soll) mit Hilfe üblicher logischer Gatter (UND-Gatter, ODER-Gatter etc.) implementiert werden. Die logischen Werte der Kalibrations-Einflußgröße (beispielsweise Wechsel der Flasche) und des Steuerungswertes (beispielsweise ob eine Neukalibrierung beim Wechsel der Flasche erforderlich ist) werden an ein solches Gatter oder an eine aus mehreren Gattern bestehende logische Schaltung in bekannter Weise angeschlossen, um das gewünschte Resultat zu erzeugen. Soweit die Initiierung einer Kalibration von der logischen Verknüpfung zweier numerischer Werte (beispielsweise der optischen Absorption des Reagenz als Kalibrations-Einflußgröße und eines entsprechenden Grenzwertes als Steuerungswert) abhängt, ist eine Komparator-Schaltung die geeignete Standardhardware zur Implementierung eines solchen Schrittes des Kalibrationsinitiierungszyklus. In der Praxis werden vorzugsweise die Entscheidungen während des Kalibrationsinitiierungszyklus Software-kontrolliert durch entsprechende Programmierung eines Mikroprozessors getroffen, welcher Bestandteil der Zentraleinheit 20 des Analysegerätes ist.

## Patentansprüche

1. Analysesystem zur selektiven automatischen Analyse von Körperflüssigkeiten auf eine Mehrzahl von Parametern, umfassend
ein Analysegerät mit Reaktionsgefäßen (8), die auf dem Gerät zu verschiedenen Bearbeitungsstationen (10 bis 16) transportiert werden und mit Mitteln, um die Kalibration für verschiedene Parameter unabhängig voneinander zu initiieren, von denen jeweils zur Initiierung einer Kalibration ein parameterspezifisch vorbestimmter Kalibrationsinitiierungszyklus durchgeführt wird, und
flüssige Reagenzien, die in dem Gerät in Reagenzgefäßen (9) bereitgehalten werden, deren Inhalt für eine Vielzahl von Analysen ausreicht,
**dadurch gekennzeichnet, daß**
das Analysegerät Mittel zum automatischen Durchführen von Kalibrationen aufweist, welche mindestens einen flüssigen Kalibrator einschließen, der einen Analyten in einer bekannten Konzentration enthält und in einer Kalibrationsstation (17) des Analysegerätes in einem Kalibratorgefäß (18) in flüssiger Form gebrauchsfertig vorrätig gehalten wird, und
zur Initiierung der Kalibration für einen Parameter in dem Kalibrationsinitiierungszyklus jeweils mindestens eine systemimmanente Kalibrations-Einflußgröße abgefragt wird,
wobei
die systemimmanente Kalibrations-Einflußgröße ausgewählt ist aus der Gruppe bestehend aus dem Wechsel eines Reagenzgefäßes (9), dem Wechsel der Reagenz-Herstellungscharge des in einem der Reagenzgefäße (9) enthaltenen Reagenz, dem Füllstand des Reagenz in einem Reagenzgefäß (9), der optischen Absorption eines Reagenz in einem der Reagenzgefäße (9), dem pH-Wert des Reagenz in einem der Reagenzgefäße (9) sowie der Art und/oder Anzahl und/oder Sequenz der zu analysierenden Proben und/oder Analysen und
in dem Kalibrationsinitiierungszyklus die Kalibrations-Einflußgröße mit einem für den jeweiligen Parameter spezifisch definierten Steuerungswert logisch verknüpft und die Entscheidung über die Initiierung der Kalibration unter Berücksichtigung des Ergebnisses der logischen Verknüpfung automatisch getroffen wird.

2. Analysesystem nach Anspruch 1, **dadurch gekennzeichnet, daß** es Mittel aufweist, um nach der Kalibration eine Kontrollmessung mit einer auf dem Gerät in einem Kontrollgefäß (19) vorrätig gehaltenen Kontrollösung bekannter Konzentration durchzuführen.

3. Analysesystem nach einem der vorhergehenden Ansprüche, **dadurch gekennzeichnet**, daß die Kalibratorstation (17) gekühlt ist.

4. Analysesytem nach einem der vorhergehenden Ansprüche, **dadurch gekennzeichnet**, daß der Kalibrator in flüssigem Zustand und in Kontakt zur umgebenden Atmosphäre tagesstabil ist.

5. Analysesystem nach einem der vorhergehenden Ansprüche, **dadurch gekennzeichnet,** daß das Kalibratorgefäß (18) einen maschinenlesbaren Code (37) und die Kalibratorstation (17) einen Leser (38) für einen solchen Code aufweist.

## Claims

1. Analysis system for the selective automatic analysis of body fluids for a plurality of parameters, comprising
an analytical apparatus with reaction vessels (8) which are transported on the apparatus to various handling stations (10 to 16), and with means to initiate the calibration for various parameters independently of one another, which carry out for the initiation of each calibration a parameter-specifically predetermined calibration-initiation cycle, and
liquid reagents which are held in readiness in the apparatus in reagent vessels (9), the volume of which suffices for a large number of analyses,
**charaterized in that**
the analytical apparatus provides means for automatically carrying out calibrations comprising at least one liquid calibrator which contains an analyte in a known concentration and is stored ready for use in liquid form in a calibrator station (17) of the analytical apparatus in a calibrator vessel (18), and
for initiation of the calibration for a parameter at least one system-immanent calibration-influencing variable is interrogated in each calibration-initiation cycle,
wherein
the system-immanent calibration-influencing variable is selected from a group consisting of the switching of a reagent vessel (9), the switching of the reagent manufacturing batch of the reagent contained in one of the reagent vessels (9), the filling level of the reagent in a reagent vessel (9), the optical absorption of the reagent in one of the reagent vessels (9), the pH-value of the reagent in one of the reagent vessels (9) and the nature and/or number and/or sequence of the sample to be analyzed and/or analyses, and
in the calibration-initiation cycle the calibration-influencing variable is combined logically with a control value specifically defined for the respective parameter and the decision on the initiation of the calibration is taken automatically in accordance with the result of the logic combination.

2. Analysis system according to claim 1, **characterized in that** it provides means to carry out after the calibration a control measurement with a control solution of known concentration stored on the apparatus in a control vessel (19).

3. Analysis system according to any one of the preceding claims, **characterized in that** the calibrator station (17) is cooled.

4. Analysis system according to any one of the preceding claims, **characterized in that** the calibrator is a liquid and is day-stable in contact with the surrounding atmosphere.

5. Analysis system according to any one of the preceding claims, **characterized in that** the calibrator vessel (18) incorporates the machine-readable code (37) and the calibrator station (17) a reader (38) for such a code.

## Revendications

1. Système d'analyse destiné à l'analyse automatique sélective d'un grand nombre de paramètres dans des liquides corporels, comprenant
un appareil d'analyse comportant des récipients réactionnels (8) qui sont amenés dans l'appareil à différents postes de traitement (10 à 16) et des moyens permettant de déclencher l'étalonnage de divers paramètres indépendamment les uns des autres, moyens qui, pour déclencher un étalonnage, effectuent un cycle de démarrage d'étalonnage prédéterminé spécifique pour un paramètre, et
des réactifs liquides qui sont contenus dans l'appareil dans des récipients à réactif (9) dont le contenu est prévu pour un grand nombre d'analyses,
caractérisé par le fait que
l'appareil d'analyse comprend des moyens pour la réalisation automatique d'étalonnages, moyens qui comportent au moins un étalon liquide contenant un analyte en une concentration connue et maintenu dans un poste d'étalonnage (17) de l'appareil d'analyse dans un récipient d'étalonnage (18) sous forme liquide prêt à l'emploi, et
pour déclencher l'étalonnage concernant un paramètre dans le cycle de déclenchement d'étalonnage, on consulte chaque fois au moins une grandeur influençant l'étalonnage, inhérente au système,
la grandeur influençant l'étalonnage, inhérente au système, étant choisie dans le groupe constitué par le renouvellement du contenu d'un récipient à réactif (8), le renouvellement de la charge de préparation de réactif du réactif contenu dans l'un des récipients à réactif (8), le niveau d'un réactif dans l'un des récipients à réactif (8), l'absorption optique d'un réactif de l'un des récipients à réactif (8), le pH d'un réactif de l'un des récipients à réactif (8) ainsi que le type et/ou le nombre et/ou la séquence des échantillons à analyser et/ou des analyses, et
dans le cycle de déclenchement d'étalonnage, la grandeur influençant l'étalonnage étant associée logiquement à la valeur de réglage spécifiquement définie pour le paramètre en question et la décision concernant le démarrage d'étalonnage étant prise automatiquement, en tenant compte des résultats de l'association logique.

2. Système d'analyse selon la revendication 1, caractérisé par le fait qu'il présente un moyen selon lequel on peut effectuer l'étalonnage d'une mesure témoin à l'aide d'une solution témoin de concentration connue, contenue comme réserve dans un récipient témoin (19) du système.

3. Système d'analyse selon l'une quelconque des revendications précédentes, caractérisé par le fait que le poste d'étalonnage (17) est refroidi.

4. Système d'analyse selon l'une quelconque des revendications précédentes, caractérisé par le fait que l'étalon est stable pendant une journée à l'état liquide et au contact de l'atmosphère environnante.

5. Système d'analyse selon l'une quelconque des revendications précédentes, caractérisé par le fait que le récipient d'étalonnage (18) comporte un code (37) lisible par des moyens mécaniques et que le poste d'étalonnage (17) comporte un lecteur (38) pour un tel code.
